# EUROPEAN PATENT SPECIFICATION

(11) **EP 3 310 729 B1**
(45) Date of publication and mention of the grant of the patent: **22.06.2022**
(21) Application number: 16734514.9
(22) Date of filing: 15.06.2016
(51) Int. Cl.: C03C 15/00

(54) **METHOD OF DECORATING A SUBSTRATE SURFACE AND ARTICLES THEREBY**
VERFAHREN ZUM DEKORIEREN EINER SUBSTRATOBERFLÄCHE UND ARTIKEL DAMIT
PROCÉDÉ DE DÉCORATION D'UNE SURFACE DE SUBSTRAT ET ARTICLES AINSI OBTENUS

(30) Priority: 19.06.2015 US 201562182030 P
(43) Date of publication of application: 25.04.2018
(73) Proprietor: Corning Incorporated, Corning, New York 14831 (US)
(72) Inventor: BAZEMORE, Brandon, Allen, Corning, NY 14830 (US); DEJNEKA, Matthew, John, Corning, NY 14830 (US); FENTON, Matthew, Wade, Elmira, NY 14905 (US); JIN, Yuhui, Painted Post, NY 14870 (US); SMITH, Charlene, Marie, Corning, NY 14830 (US)
(74) Representative: Elkington and Fife LLP
(86) International application number: PCT/US2016/037554
(87) International publication number: WO 2016/205317

(56) References cited:
- WO-A1-2014/070869
- US-A1- 2012 134 025

## Description

### Background

The disclosure relates to methods of decorating a surface and articles made by the method.

US 2012/134025 A1 relates to chemically strengthened glass sheets including a smooth side and a rough side. The compressive stress values of the smooth side and the rough side are substantially in equipoise.

WO 2014/070869 A1 relates to methods for texturing opaque, colored and translucent materials.

### Summary

The invention relates to a decorated glass article comprising at least three different gloss contrast regions having at least three gloss levels having a relative glass difference of at least 20 units when measured at from at least one incidence angle of 20 degrees, 60 degrees, or 85 degrees.

The invention further relates to a decorated article comprising a substrate having a first matte appearance and a first rough surface texture having a first roughness; and a plurality of contrast regions on the surface of the substrate comprising a second matte contrast region and a second rough texture having a second roughness, and a third matte contrast region and a third rough texture having a third roughness. The first roughness is less rough than the second roughness, and the second roughness is different from the first and the third roughness.

The invention further relates to a method of making an article having aesthetic surface features having two or more contrast levels on at least a portion of the surface of a chemically etchable original substrate. The method comprises a first masking on at least a portion of the original surface area of the substrate to form a partially masked substrate; a first chemical roughening on at least a portion of the unmasked surface area portion of the masked substrate to produce a matte-finished area on the masked substrate; and removing the first mask to produce a first area of contrast with respect to the original surface area and the matte-finished area. The method further comprises a second masking on at least a portion of the matte-finished surface area to form a masked matte-finished area; a first chemical polishing on at least a portion of the unmasked matte-finished area to produce a first polished matte-finished area; and removing the second mask to produce a second area of contrast with respect to the unmasked original surface area, the matte-finished surface area, and the polished matte-finished area.

### Brief Description of the Drawings

Fig. 1 shows a summary of a method of making the decorated article.
Figs. 2A to 2G show glossy substrate samples that were etched to different greyscales.
Figs. 3A to 3D show reflectance spectra and color of decorated glossy substrate parts selected from Figs. 2.
Figs. 4A and 4B, respectively, is a schematic summary of exemplary processes to create aesthetic features having multiple contrast levels on a glossy surface (4A) or on a rough cut surface (4B).
Figs. 5A to 5D show examples of aesthetic or decorated glossy substrate surfaces.
Fig. 6 shows a Zygo image of the star patterns that was shown in Fig. 5B (right side) on a glossy substrate surface.
Fig. 7 shows Ring-on-Ring (RoR) and abraded Ring-on-Ring (aRoR) results of the glossy substrate surface before (right) and after (left) patterning steps.
Fig. 8 shows a bar chart that demonstrates that one can start with either a polished sample or a rough-cut sample, i.e., an un-polished sample, then make grey scale patterns on the surface using the disclosed etching methods, and not significantly compromise the article's strength.
Fig. 9 shows a contour plot of etchant compositions that contain ammonium fluoride and hydrofluoric acid, and that can be used to obtain desired gloss levels with time.
Fig. 10 shows a graph of gloss 60 versus time for an etchant containing HF and sulfuric acid used to etch a white ceramic substrate and to obtain differential gloss.

### Detailed Description

Various embodiments of the disclosure will be described in detail with reference to drawings, if any. Reference to various embodiments does not limit the scope of the invention, which is limited only by the scope of the claims attached hereto. Additionally, any examples set forth in this specification are not limiting and merely set forth some of the many possible embodiments of the claimed invention.

### Definitions

"Glossy substrate," "glossy surface," and like terms used herein refer to, for example, at least one of: a glass, a glass-ceramic, a ceramic, or a combination thereof, having a glossy characteristic, for example, a substrate, piece, or part, having a gloss 60 value of from 50 gloss units (GU) and above, for example, 55 and above, such as 55 to 90 GU, including intermediate values and ranges, the gloss range being measured with a 60° Gloss Meter procedure. Gloss ranges can be measured, for example, with a selected incidence angle, such as 60° (e.g., semi-gloss: -10 to 70 GU), 20° (e.g., high gloss: greater than 70 GU), and 85 ° (e.g., low gloss: less than 10 GU) depending on the gloss level (see gloss-meters.com/GlossIntro2.htm).

"Rough cut substrate," "rough cut surface," "matte finish surface," "matte finished," and like terms used herein refer to, for example, at least one of: a glass, a glass-ceramic, a ceramic, or a combination thereof, which specifically referenced rough cut substrate or rough cut surface does not have a glossy characteristic, for example, a substrate, piece, or part, that is unpolished, having a gloss 60 value of from 49 gloss units (GU) or less, for example, 49 and below, such as 49 to 0.001 GU, 45 to 0.1 GU, 40 to 1 GU, including intermediate values and ranges.

"Rough," "roughening," "chemically roughening," "etch," "chemical etching," and like terms refer to, for example, contacting a first surface with a chemical etchant composition to produce a second surface having a greater surface roughness, such as a first gloss surface producing a second matte finish surface.

"Polish," "polishing," "chemically polishing," "polish etch," "polish etching," and like terms refer to, for example, contacting a first surface with a chemical polishing composition to produce a second chemically polished surface having a reduced surface roughness and a change in one or both of the surface morphology or the color appearance of the surface.

"Include," "includes," or like terms means encompassing but not limited to, that is, inclusive and not exclusive.

"About" modifying, for example, the quantity of an ingredient in a composition, concentrations, volumes, process temperature, process time, yields, flow rates, pressures, viscosities, and like values, and ranges thereof, or a dimension of a component, and like values, and ranges thereof, employed in describing the embodiments of the disclosure, refers to variation in the numerical quantity that can occur, for example: through typical measuring and handling procedures used for preparing materials, compositions, composites, concentrates, component parts, articles of manufacture, or use formulations; through inadvertent error in these procedures; through differences in the manufacture, source, or purity of starting materials or ingredients used to carry out the methods; and like considerations. The term "about" also encompasses amounts that differ due to aging of a composition or formulation with a particular initial concentration or mixture, and amounts that differ due to mixing or processing a composition or formulation with a particular initial concentration or mixture.

"Optional" or "optionally" means that the subsequently described event or circumstance can or cannot occur, and that the description includes instances where the event or circumstance occurs and instances where it does not.

The indefinite article "a" or "an" and its corresponding definite article "the" as used herein means at least one, or one or more, unless specified otherwise.

Abbreviations, which are well known to one of ordinary skill in the art, may be used (e.g., "h" or "hrs" for hour or hours, "g" or "gm" for gram(s), "mL" for milliliters, and "rt" for room temperature, "nm" for nanometers, and like abbreviations).

Specific and preferred values disclosed for components, ingredients, additives, dimensions, conditions, times, and like aspects, and ranges thereof, are for illustration only; they do not exclude other defined values or other values within defined ranges. The composition and methods of the disclosure can include any value or any combination of the values, specific values, more specific values, and preferred values described herein, including explicit or implicit intermediate values and ranges.

Ceramic materials have been widely employed for consumer electronic devices (e.g., cell phones, computers, and televisions) because of their unique functionalities as insulators and semiconductors. Recently, ceramic and glass-ceramic materials have also been used as covers for electronic devices. The functionality, the appearance, the "touch feel" (i.e., the perception of texture by touch), or a combination thereof, can become a desired feature of such materials.

Etching has been widely used to make glass having a frosty surface. By applying an etch-resistant mask to the glass surface, the etching process can selectively frost the un-masked area and therefore introduce, for example, images or features on glass (and enhance the aesthetic appearance). Existing processes can only create features with a binary system (i.e., 2 levels, e.g., frost vs. non frost; or etched vs. non etched).

"Glossy substrate" has been used elsewhere to describe a synthetic glossy black glass ceramic material developed by Corning, Inc. Coming's previous work developed methods for etching the glossy substrate surface to produce a matte-finish (see application USSN 61/721797, the priority of which is claimed by PCT/US2013/067472, published as WO 2014/070869).

Glass ceramics are described in, for example, JPH11100229A and JPH11100230A, which mentions an infrared ray transmitting glass ceramics free from environmental pollution and suitable as a top plate of cooking utensils. KR1336935B1 mentions methods for etching a glass surface to achieve aesthetic surface appearances.

The invention provides decorated articles and methods of making decorated articles. The decorated article can have one or more aesthetic features comprised of contrast levels added to an initially glossy substrate or a matte finish substrate of the article and can have one or more, such as multiple, contrast levels.

The method of the invention comprises: at least one masking step, such as two or more; at least one chemical roughening step; at least one chemical polishing step; and at least one demasking step.

The method combines chemical roughening, masking, and chemical polishing steps, to generate features on the glossy substrate surface.

In embodiments, the disclosed method can be applied to any glass, glass-ceramic, ceramic material, or a combination thereof, such as white, black, or intermediate gray scale. However, a colorful ceramic or a glass ceramic material can also be selected. The ceramic substrate can have uniformly embedded crystals, which crystals facilitate the formation of a uniform matte finish surface during the etching process. In contrast, for a glass substrate it is more difficult to generate a uniform appearance. Also, the contrast between the gloss and matte finish surfaces is more evident, or the contrast is larger, on the colorful ceramic substrate than on a transparent glass surface. "Colorful," and like terms refer to a translucent or opaque, ceramic or a glass-ceramic material that has color visible to a human, that is, colored, including gray scale, white, or black.

The chemical roughening processes can be, for example, any of the chemical roughening processes for the glossy substrate described in the above mentioned patent application USSN 61/721797.

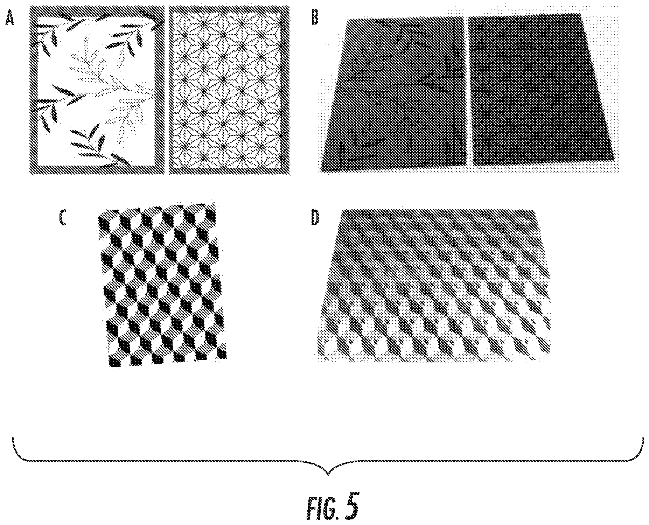

The masking techniques can be any techniques that can apply etch-resistant materials to the glossy substrate surface. The chemical polishing reagents can be any of the etchants containing hydrofluoric acid (HF) with an optional mineral acid or organic acid (e.g., sulfuric acid, hydrochloric acid, nitric acid, citric acid, acetic acid and like acids). Overall, the process creates multiple levels of colors and contrast to the glossy substrate surface and generates aesthetic features on the surface (see, e.g., Fig. 5).

Compared with the existing methods, the disclosed method is different in many respects, for example: the disclosed method works on many surfaces, including a glass ceramic (e.g., glossy substrate), while most of the existing methods work on glass; and the disclosed method can generate multiple levels of colors and greyscales, while other methods can only generate two levels of contrast (i.e., a binary system). Moreover, the glossy substrate part treated by the disclosed method can possess, for example, a matte-finish and aesthetic appearance, having excellent and selectable touch feel, fingerprint resistance, and good mechanical strength (e.g., after etching and ion-exchange).

The disclosed method provides several advantages, including:
The roughening and polishing steps of the disclosed methods can change the color, gloss, and contrast of glossy substrate to different levels (multiple levels).
The disclosed methods can generate an aesthetic appearance on a glossy substrate surface or on a rough-cut or matte finish substrate surface, or an aesthetic appearance on combinations of a glossy substrate surface and a rough-cut substrate surface.
The finished surface possesses, for example, good aesthetic appearance, a range of touch feel (see for example, C.J. Barnes, et al., "Surface finish and touch - a case study in a new human factors tribology," in Wear, 257 (2004) 740-750), and a range of good mechanical strength as measured by, for example, Ring-on-Ring methods and load to failure analysis of, for example, from 981 to 2452 kN (100 to 250 kgf). In embodiments, the touch feel can be evaluated by, for example, applying known methods, such as surveying a human panel with representative samples and controls, and assigning relative touch feel values.
The roughened sections do not show, for example, fingerprints and smudges like the un-roughened glossy portions.

Significantly, unlike laser ablation or sandblasting, the disclosed decoration methods do not significantly degrade the strength of the glass.

The disclosed method uses gloss and texture to add visual "out-of-plane" dimensions to patterned designs, which dimensions are not readily achievable in printed or painted parts, and which dimensions are especially advantageous for 3-D effects.

The generated decoration or image is an integral part of the material and will not scratch, flake, fade, or weather, which is an issue with, for example, decorations or images made from paint or ink.

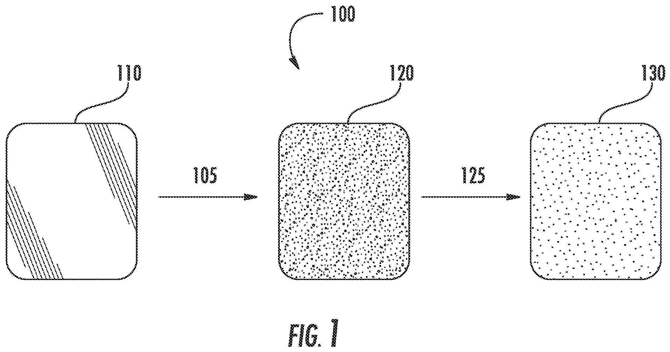

In embodiments, the disclosure provides a method for etching and manipulating the surface appearance, feel texture ("touch feel"), and color of a glossy substrate material to different levels (see Fig. 1). In embodiments, the combination of surface masking and etching can generate one or more decorations, for example, regular patterns, irregular patterns, line art, graphic images, 3D-images, aesthetic features, and like decorations, or combinations thereof on the glossy substrate surface (see Figs. 5A to 5D).

The invention relates to a decorated glass-ceramic article, comprising:
at least three different gloss contrast regions having at least three gloss levels having a relative gloss difference of at least 20 units when measured at from at least one incidence angle of: 20 degrees, 60 degrees, or 85 degrees.

In embodiments, the matte surface can have a roughness value (Ra) of, for example, greater than 80 nm. The difference in roughness of the matte surface with respect to another contrast region can be, for example, greater than 100 nm, such as 110 to 500 nm.

The invention further relates to a decorated matte article, comprising:
a substrate having a first matte appearance and a first rough surface texture having a first roughness; and
a plurality of contrast regions on the surface of the substrate comprising:
   a second matte contrast region and a second rough texture having a second roughness, and
   a third matte contrast region and a third rough texture having a third roughness,
wherein the first rough surface texture is less rough than the second roughness, and the second roughness is different, i.e., less than or greater than, from the first or the third roughness. The difference in roughness with respect to another contrast region can be, for example, greater than 100 nm, such as 110 to 500 nm.

### GLOSSY PROCEDURE

The invention also relates to a method of making an article having aesthetic surface features having two or more (i.e., at least two) contrast levels on at least a portion of the surface of a chemically etchable original substrate, comprising:
a first masking on at least a portion of the original surface area of the substrate to form a partially masked substrate;
a first chemical roughening on at least a portion of the unmasked surface area portion of the masked substrate to produce a matte-finished area on the masked substrate;
removing the first mask to produce a first area of contrast with respect to the original surface area and the matte-finished area;
a second masking on at least a portion of the matte-finished surface area to form a masked matte-finished area;
a first chemical polishing on at least a portion of the unmasked matte-finished area to produce a first polished matte-finished area; and
removing the second mask to produce a second area of contrast with respect to the unmasked original surface area, the matte-finished surface area, and the polished matte-finished area.

In embodiments, the first masking applies an etch-resistant material selected from at least one of: a wax, a polymer, a water insoluble film or coat, a UV curable film or coat, an adhesive, a lamination layer, or a combination thereof, and the first masking applies the mask to the surface by inkjet printing, screen printing, lamination, or combinations thereof.

In embodiments, the first chemical roughening produces a roughened surface having a matte-finished appearance and the original surface is a substrate selected from at least one of: a glossy glass, a glossy glass-ceramic, a glossy ceramic, or a combination thereof.

In embodiments, the first chemical roughening includes etching the original surface substrate, i.e., a glossy glass or glossy glass ceramic, with an etchant containing hydrofluoric acid (HF) and produces a roughened surface having a surface roughness of from 200 to 1,000 nm RMS, and the first chemical polishing accomplishes at least one of:
polishing the matte-finished surface;
reducing the surface roughness;
changing the color of the original surface;
or a combination thereof.

In embodiments, the first chemical polishing changes only the visual appearance of the matte-finished surface and not the visual appearance of the original surface.

In embodiments, removing the first mask can be accomplished, for example, by contacting the mask of the masked original surface area in a suitable organic solvent.

In embodiments, the original substrate can have a thickness of from 50 microns to 100 millimeters, e.g., 50 microns to 1.5 millimeters in typical electronics applications, and 3 to 100 millimeters in typical consumer applications, the original substrate has a geometry selected from flat, curved, or a combination thereof, and the strength of the produced article is unchanged or is reduced by from 0.1 to 20 percent compared to the strength of the original substrate, i.e., the method does not substantially diminish the strength of the produced article compared to the original substrate.

In embodiments, the first area of contrast with respect to the original surface area, the second area of contrast with respect to the original surface area, and the matte-finished area, each have a relative reflectance difference of from 5 to 25%.

In embodiments of the foregoing method:
if the original substrate is a black opaque glossy ceramic substrate, then it has a total reflectance of 90 to 99% including the specular component of from 0.001 to 20%, and has a total transmittance of from 0.001 to 20%;
if the original substrate is a white opaque glossy ceramic substrate, then it has a total reflectance of 75 to 99% including the specular component of from 0.001 to 20%, and has a total transmittance of from 0.001 to 20%; and
if the original substrate is a grey opaque glossy ceramic substrate, then the substrate has a total reflectance of 40 to 75% and has a total transmittance of from 0.001 to 20%.

In embodiments, removing the second mask produces the second area of contrast with respect to the original surface area and the matte-finished area and the resulting substrate has two or more surface textures, the two or more surface textures each having a gloss difference with respect to the other surface textures of from 5 to 20%.

In embodiments, the first etching is accomplished in a solution comprising a fluorinated acid selected from HF, NH₄F, NH₅F₂, KF, NaF, KHF₂, NaHF₂, or a combination thereof, and the first chemical polishing is accomplished in a solution containing HF, a mineral acid, an organic acid, or a combination thereof. The mineral acid can be, for example, one or more acids selected from HCl, H₂SO₄, HNO₃, and the organic acid can be, for example, one or more of acetic acid, citric acid, and like organic acids, or a combination thereof.

In embodiments:
the original substrate is a glossy substrate having a gloss value (gloss 85) from 80 to 100 and a surface roughness from 0.2 nm RMS to 10 nm RMS;
the matte-finished area has a gloss value (gloss 85) of from 40 to 60 and a surface roughness from 10 nm RMS to 1,000 nm RMS;
the first area of contrast has a gloss value (gloss 85) of from 80 to 100 and a surface roughness from 0.2 nm RMS to 100 nm RMS;
the first chemically polished matte-finished area has a gloss value (gloss 85) of from 40 to 60 and a surface roughness from 200 nm RMS to 1,000 nm RMS; and
the second area of contrast has a gloss value (gloss 85) of from 10 to 30 and a surface roughness from 200 nm RMS to an RMS less than the RMS of the first chemically polished matte finished area of from 200 nm RMS to 1,000 nm RMS.

In embodiments, the method can further comprise repeating the foregoing method steps, in the order listed, one or more times.

In embodiments, the disclosure provides an article having at least one original surface decorated in accordance the foregoing method.

Referring to the figures, Fig. 1 shows a brief summary of the etching process (100) that can change the color and appearance of a glossy substrate sample. The fresh glossy substrate part (110) has a glossy surface (i.e., having low surface roughness) and optionally having a black or other color. A chemical roughening step (105) increases the surface roughness of the glossy substrate. The glossy substrate after chemical roughening has a matte-finished appearance (120) (high surface roughness) and can be black or other color. A chemical polishing step (125) over a period of time gradually reduces the surface roughness and changes the surface morphology of the surface. For example, a black matte substrate (120) after chemical polishing (125) can be grey in color (130).

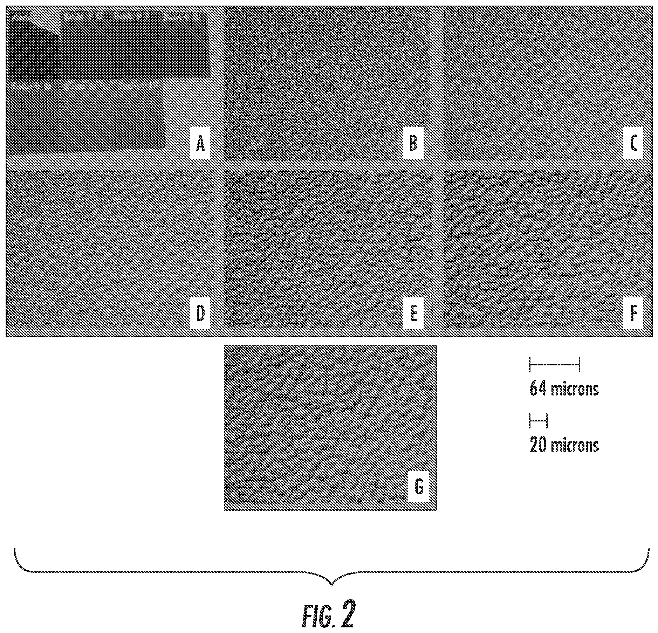

Figs. 2A to 2F show glossy substrate samples that were etched to different greyscale levels through the conditions described in Table 1. Fig. 2A show images of glossy substrates before and after both roughening and polishing treatments. Figs. 2B to 2F show optical microscope images at 500X after the step of roughening only (2B), and after roughening and the step of 1 min, 3 min, 6 min, 9 min, and 12 min of polishing (2C to 2F)(Sample Nos. 3 to 7 in Table 1). The scale bar in these images is 1/2 inch = 64 microns.

**Table 1. Surface roughening (etch time) and chemical polishing of glossy substrates.¹**

| **Sample No.** | **Roughening (mins)** | **Polish (mins)** | **Haze** | **DOI** | **Gloss (20°)** | **Gloss (60°)** | **Gloss (85°)** | **Roughness (nm)** | **Feature size (micron s)** | **L*** | **a*** | **b*** |
|---|---|---|---|---|---|---|---|---|---|---|---|---|
| 1 | None | None | 0 | 99.7 | 73.0 | 90.4 | 101.1 | 1.5 | n/a | 24.26 | 0.08 | -0.98 |
| 2 | 8 | None | 0 | 0 | 0.1 | 0.9 | 57.6 | 564.5 | too small | 15.64 | -0.2 | -1.58 |
| 3 | 8 | 1 | 0 | 0 | 0.0 | 0.4 | 38.0 | 855.0 | too small | 16.62 | 0.06 | -1.24 |
| 4 | 8 | 3 | 0 | 0 | 0.1 | 0.4 | 15.2 | 622.6 | 7.3 ± 1.0 | 21.31 | -0.1 | -0.99 |
| 5 | 8 | 6 | 0 | 0 | 0.2 | 1.7 | 25.8 | 496.9 | 11.5 ± 1.0 | 23.96 | -0.1 | -0.99 |
| 6 | 8 | 9 | 0 | 0 | 0.2 | 2.8 | 34.7 | 507.6 | 14.3 ± 0.8 | 23.79 | 0.09 | -0.94 |
| 7 | 8 | 12 | 0.1 | 0 | 0.3 | 3.1 | 41.5 | 491.2 | 16.4 ± 1.6 | 21.87 | 0 | 0.2 |

| | | | | | | | | | | | | |
|---|---|---|---|---|---|---|---|---|---|---|---|---|
| 1. Color coordinates are for fluorescent (F02) light, and having the spectral component included (SCI). | | | | | | | | | | | | |

In embodiments, the contrast among or between different areas can be generated not only because of gloss, or gloss at a different angle, but also due to other optical properties (e.g., DOI and color). In a typical example, the properties of different contrast areas are listed in Table 1. For example, the properties of the glossy area are listed as Sample No. 1 in Table 1. The properties of the matte finished area are listed as Sample No. 2 in Table 1. The properties of the polished areas are listed as Sample Nos. 3 to 7 in Table 1.

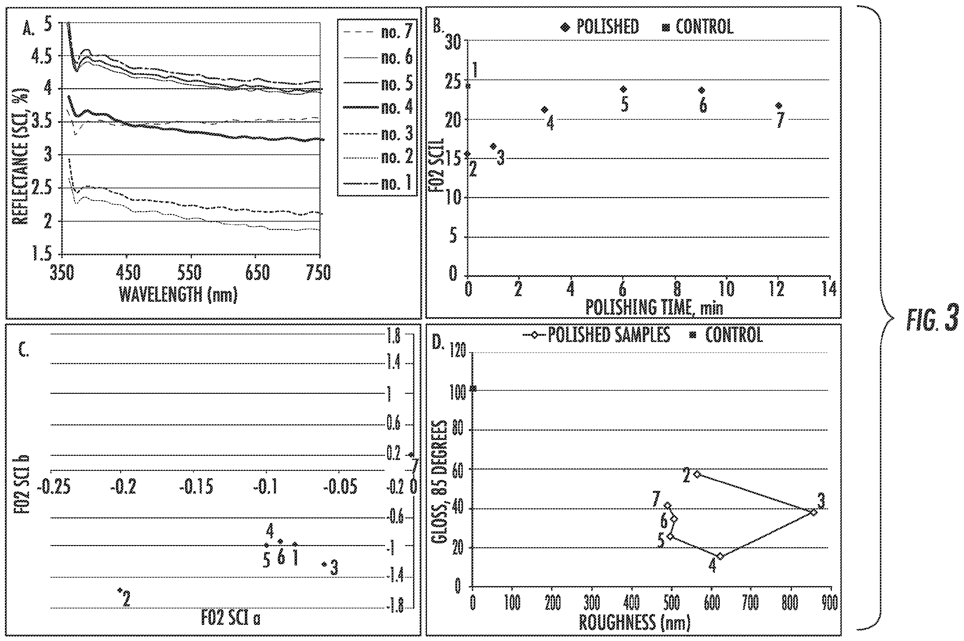

Figs. 3A to 3D show reflectance spectra and color of the glossy substrate parts (Sample Nos. 1 to 7 in Table 1). Fig. 3A shows the SCI-reflectance (specular reflectance components included) of the parts listed in Table 1.

Fig. 3B and Fig. 3C show the L^{∗} values, and the a^{∗} versus b^{∗} plot of color coordinates, respectively, of the samples. Fig. 3B shows the L^{∗} given as a function of the polishing time. Numbers under data points represent the sample numbers from Table 1. Fig. 3C shows the a^{∗}b^{∗}, F02 SCI. Numerals (1 to 7) under data points represent sample numbers from Table 1. Fig. 3D shows the Gloss at 85 degrees as a function of surface roughness (in nanometers). The numerals (1 to 7) beneath data points represent sample numbers from Table 1. Referring to Figs. 3B and 3C, after chemical roughening (sample 2), the chemically roughened glossy substrate in the roughened area is darker (low L^{∗} value), and in the instance where the starting substrate is a black glossy surface, the chemically roughened areas of the glossy substrate has a blue color appearance compared to the glossy substrate before chemical roughening. The continued chemical polishing of the roughened glossy substrate part gradually increases the brightness (L^{∗}) and shifts the color of the chemically polished area from blue to yellow (Fig. 3C) as a function of polish time by an etchant, for example, of 1.5M HF and 0.6M of HCl, or polishing depth. The change of the a^{∗} value is small. The impacts of chemically etching the glossy substrate surface are summarized in Table 2, where an upward arrow ("↑") indicates a relative increase, and a downward arrow ("↓") indicates a relative decrease.

**Table 2. Impact of the etching process on the surface morphology and the color change of the glossy substrate.**

| **Treatment** | **Roughness** | **Feature size** | **L*** | **a*** | **b*** |
|---|---|---|---|---|---|
| Roughening | ↑↑↑ | Create features | ↓↓ | ↓ (slightly) | ↓↓↓ (significantly) |
| Polishing | ↓ | ↑ | ↑↑ | ↑ (slightly) | ↑↑↑ (significantly) |

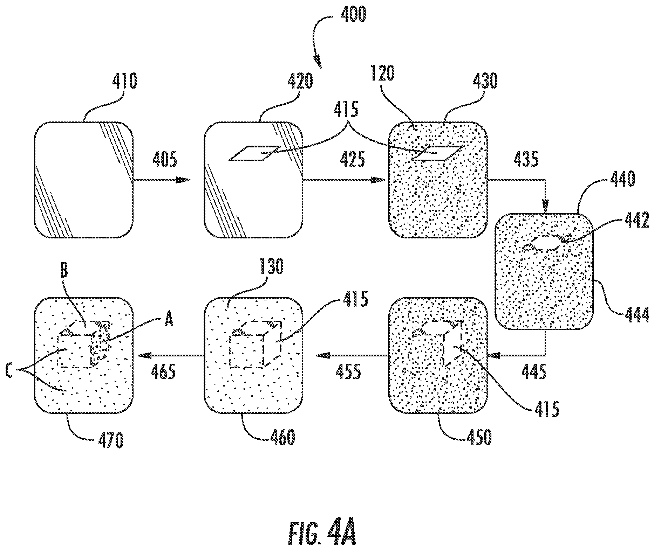

Referring to the figures, Fig. 4A illustrates a disclosed method that begins with a glossy surface substrate. Fig. 4A shows a schematic summary of a process to create aesthetic features having multiple contrast levels on a starting material comprising a substrate having a glossy surface or a glossy substrate. Exemplary aesthetic feature(s) that can be achieved by the process shown in Fig. 4A can be, for example, a cubic pattern on the glossy substrate surface.

For example: Step 1 is a first masking (405) (protecting) of a selected area, e.g., with a parallelogram shaped mask (415) of the glossy substrate surface (410) protects the masked area from subsequent roughening step(s) while masked. In this step, the etch-resistant mask material can be applied (405) to the glossy substrate surface (415) by, for example, inkjet printing, and like suitable techniques, such as a single-mask or a plurality of masks in an array.

Step 2 is a chemical roughening (425) of a selected portion of surface (420) area or the entire unprotected or un-masked glossy substrate surface (420) area. In this step, the unprotected area (i.e., unmasked) gets roughened and a matte-finished appearance (430) is created.

In Step 3 the first mask (415) is removed (435) by, for example, soaking the mask, selectively or entirely, in organic solvent (e.g., acetone), or by a lift-off technique, to reveal the previously protected glossy area (442). A contrast between the revealed glossy area (442) and the adjacent or surrounding matte-finished area (444) is achieved.

In Step 4 a second or new masking (protecting) (445) of a matte-finished area is accomplished to form a second masked area (415) to protect the new masked area from the subsequent chemical polishing. The second masking methodology can be similar or identical to initial or first masking of Step 1.

In Step 5 a chemical polishing (455) on the matte-finished substrate surface (450) having the masked area (415) is accomplished. In Step 5, an etchant containing, for example, hydrofluoric acid (HF), polishes the unprotected matte-finished surface reducing its surface roughness, and changes the color of the resulting polished substrate surface area (460). Note that the chemical polishing only changes the appearance of the matte-finished surface, and not the glossy surface area (442).

In Step 6 the second mask (415) can be removed (465), for example, by soaking the masked portion of the part, or the entire part in an organic solvent (e.g., acetone) to afford the tri-level patterned substrate surface (470). Accordingly, a three-level (i.e., a tri-level) contrast and associated patterns can be achieved after the aforementioned steps of alternately etching and masking on one or more areas of the substrate.

In embodiments, a part having a glossy finish can be selected as the starting substrate for the disclosed decorating method. Referring to Fig. 4A, when a part having a glossy finish is selected as the starting substrate, the following sequence of steps can be used to achieve a tri-level surface image or texture:
Step 1. Surface masking (405) a glossy finish substrate (410) having, for example, a fine surface finish, having a low Ra, and having a glossy appearance, for example, with at least one mask area or more masked regions (120), having for example an aesthetic or geometric pattern (see Fig. 4A for a graphic summary of all steps beginning with a glossy substrate (410)).
Step 2. Chemical roughening (425) the masked glossy substrate to produce a chemically roughened substrate (430) and one or more masked regions (120);
Step 3. Removing the mask (435);
Step 4. Applying one or more additional masks or masked regions (445) to the chemically roughened and unmasked substrate (440);
Step 5. Chemical polishing (455); and
Step 6. Removing the second mask (465) to afford the mask-free, and once roughened (etched) and once chemically polished substrate (470) having the region(s) A, B, and C, where the roughness or "darkness" of these regions is in the order: A (roughened finish) is greater than C (roughened and polished finish) is greater than B (original glossy finish 410).

In embodiments, the foregoing method can produce a surface decorated article having one or more three dimensional ("3D") features, for example, and referring to Fig. 4A reference numerals:
the glossy substrate (410) can have a gloss value (gloss at 85 degrees; i.e., "gloss 85") of, for example, from 80 to 100 or more;
the matte-finished area (444) has a gloss value (gloss 85) of, for example, from 40 to 60;
the first area of contrast (430) has a gloss value (gloss 85) of, for example, from 80 to 100;
the first polished matte-finished area (444) has a gloss value (gloss 85) of, for example, from 40 to 60; and
the second area of contrast (470) has a gloss value (gloss 85) of, for example, from 10 to 30. Alternatively, gloss 60 or gloss 20 values can be used to characterize the gloss properties of the surface decorated articles.

In embodiments, the disclosure provides a method of making aesthetic features having multiple contrast levels, for example, at least two (i.e., a plurality) such as two, three, or more contrast levels, on at least a portion of the surface of a matte finish substrate or rough cut substrate.

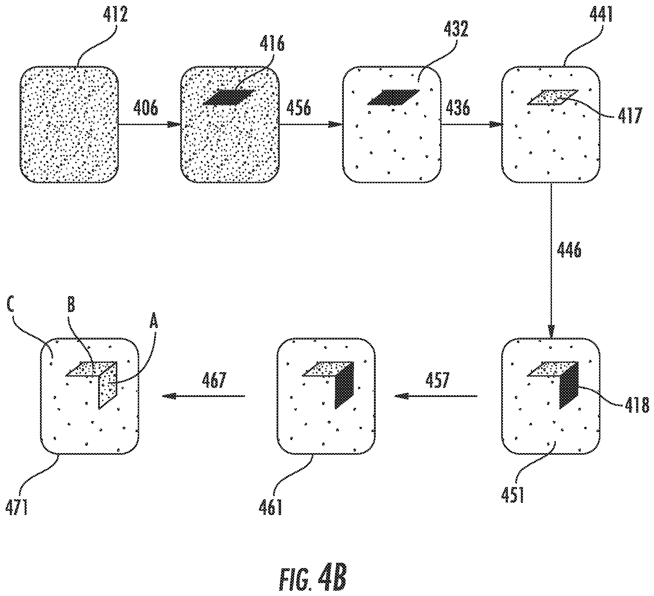

Referring to the figures, Fig. 4B illustrates a method that begins with a rough cut or matte surface substrates. This method does not fall within the scope of the claims and is provided for reference purposes only. For example:
a first masking (406) on at least a portion of the surface area of a matte finish substrate (412) or rough cut substrate (412) to form a masked matte finish substrate or masked rough cut substrate, i.e., covering a portion of the matte finish substrate surface or masked rough cut substrate with a removable, protective mask (416) (black parallelogram);
a first chemical polishing (456) on at least a portion of the unmasked surface area (412) of the masked matte finish substrate to produce a second matte-finished area (432) on the masked matte finish substrate;
removing the first mask or demasking (436) to produce a part or piece (441) having a first contrast area (417), i.e., a bi-level contrast area, which contrast and texture can be different from the texture of the original first matte finish area (412) or the newly formed or transformed second matte-finished area (432);
a second masking (446) to form a second mask (418) on at least a portion of the second matte-finished surface area (441);
a second chemical polishing (457) on at least a portion of the second masked matte-finished area (451) to form masked piece (461); and
removing the second mask (467) (i.e., a second demasking) to produce a piece (471) having a first contrast area (B), a second contrast area (A), i.e., a tri-level contrast area, from removing the mask (418), and the second chemical polished and matte-finished area(s) (C).

In aspects of the disclosed reference method, a part having a "matte" finish or "rough cut" finish can be selected as the starting substrate for the disclose decorating method. Referring to Fig. 4B, when a part having a matte finish or rough cut finish is selected as the starting substrate, the following sequence of steps can be used to alternatively achieve a tri-level image or texture result:
Step 1. Surface masking (406) a matte finish substrate (412) having, for example, a matte or rough-cut surface finish, having a high Ra, and having a matte, dull, or low luster or un-shiny appearance, for example, with at least one mask area or more masked regions (416), having for example an aesthetic or geometric pattern (see Fig. 4B for a graphic summary of all steps beginning with matte substrate (412)).
Step 2. Accomplishing a first chemical polishing (456) the masked matte substrate to produce a chemically polished substrate (432) and the one or more masked regions (416);
Step 3. Removing the mask (436) or "demasking" to afford the chemically polished substrate (441) and the previously masked or unmasked area (417) having a matter finish;
Step 4. Applying a mask (446), for example, one or more additional masks (418) or masked regions, to the chemically polished and unmasked substrate (441) to afford the second masked substrate (451);
Step 5. Accomplishing a second chemical polishing (457) to afford the second chemically polished substrate (461) having the masked region(s) (418) still intact; and
Step 6. Removing (467) the second mask (418) to afford the mask-free, and twice chemically polished substrate (471) having the region(s) A, B, and C, where the roughness or "darkness" appearance of these regions is: A and B are greater than C because both A and B are polished one time, and C is polished twice. As between A and B, which one is darker depends upon the first polishing (456) step and the second polishing (457) step, which removes more surface (or is polished for a longer time). If the first polishing (456) step is longer and more extensive than the second polishing (457) step, then A is greater than B, and B is greater than C (i.e., A > B > C) with respect to the relative darkness. If the second polishing (457) step is longer and more extensive than the first polishing (456) step, then B is greater than A, and A is greater than C (i.e., B > A > C) with respect to the relative darkness.

Figs. 5A to 5D show examples of aesthetic glossy substrate surfaces made by the disclosed method. Fig. 5A shows a two-level (bi-level) design of surface features on the glossy substrate (hollow and filled leaves; and stars). Fig. 5B shows the appearance of the finished glossy substrate surface based on the design from images of Fig. 5A. Fig. 5C shows a three-level (tri-level) design of cubic patterns. Fig. 5D shows the 3D patterns achieved on the glossy substrate based on the design from the image of Fig. 5C.

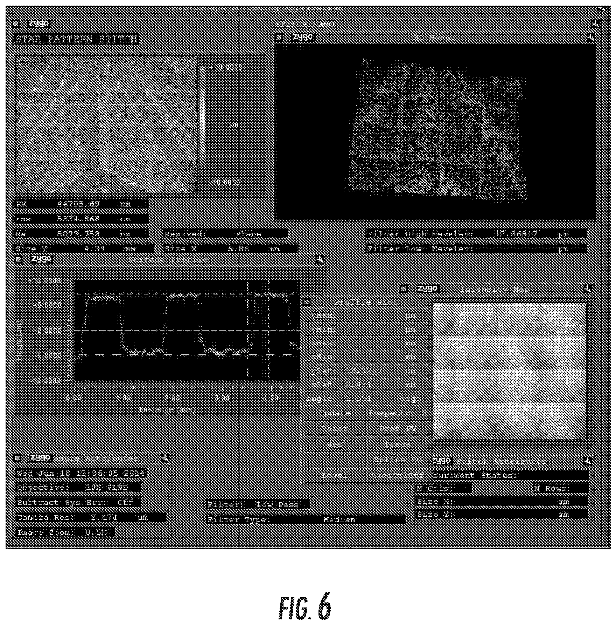

Fig. 6 shows a interferometric image of the star pattern obtained from processing a glossy substrate surface in accord with the disclosed process, which star pattern is also shown on the right side Fig. 5B. A clear boundary between the roughened and polished areas was observed. The polishing step removed about 12 microns of the glossy substrate surface.

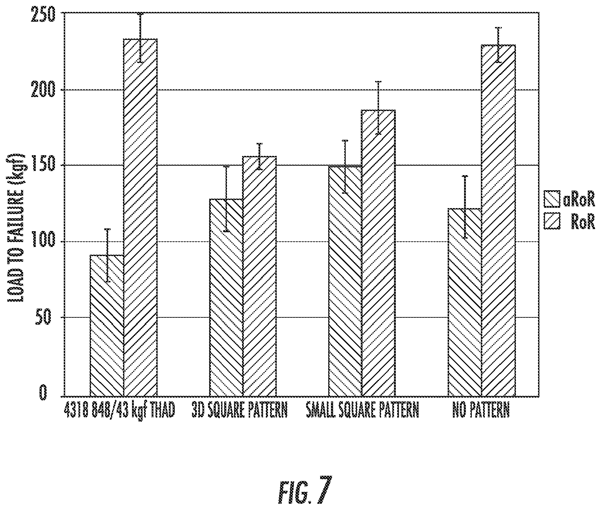

Fig. 7 shows Ring-on-Ring (RoR) and abraded Ring-on-Ring (aRoR) results of the glossy substrate surface before and after the patterning process; for a nominal 1 mm thickness. The glossy substrate patterning process lowered the strength of the piece slightly compared to pieces without the pattern. The aRoR results suggest the glossy substrate patterning process doesn't change (i.e., reduce) the retained strength of the glossy substrate piece.

In embodiments, the maximum surface roughness can be, for example, from 200 nm RMS to 1000 nm RMS, and preferably less than 750 nm, and more preferably less than 500 nm such as from 200 nm RMS to 450 nm RMS.

In embodiments, the disclosed method using a glossy substrate can further comprise complete or partial repeating of the following steps, one or more times, e.g., from 1 to 100 times:
a second chemical roughening on at least a portion of the unmasked surface area of the partially masked glossy substrate to produce a matte-finished area on the partially masked glossy substrate;
removing the mask to produce a third contrast area, i.e., an intermediate contrast area, having a gloss value between the glossy area and the matte-finished area;
a third masking on at least a portion of the matte-finished surface area to form a partially masked matte-finished area;
a second chemical polishing on at least a portion of the unmasked matte-finished area to produce a second polished matte-finished area; and
removing the third mask to produce a fourth contrast area, i.e., a second tri-level contrast area, between the unmasked glossy area, the matte-finished surface area, and the second polished matte-finished area.

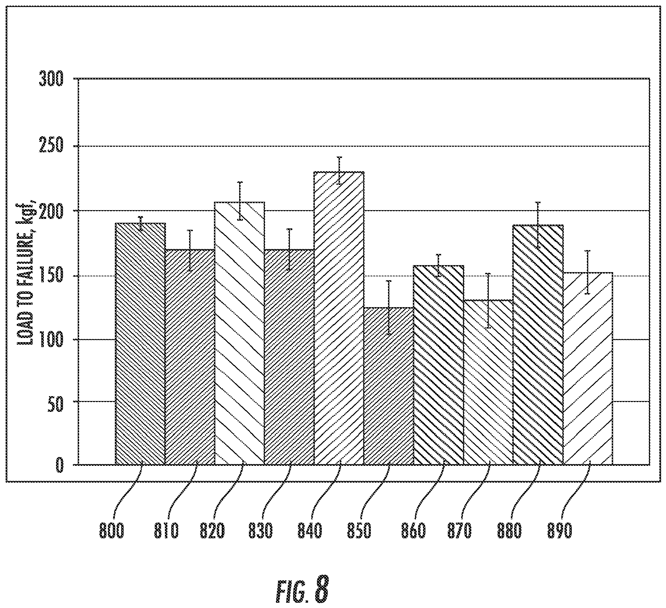

Fig. 8 shows a bar chart that demonstrates that one can start with a rough-cut sample, i.e., an un-polished sample and not a glossy sample, then make grey scale patterns on the surface using the disclosed masking, etching, and polishing steps, and not substantially compromise the strength of the article. The exemplary samples that were tested for load to failure analysis were as follows: rough-cut non-abraded (800); rough-cut 5 psi abrasion (810); rough-cut checkerboard pattern ("purina") non-abraded (820); rough-cut purina 34 kPa (5 psi) abrasion (830); polished non-abraded (840); polished 34 kPa (5 psi) abrasion (850); polished "3D square" design non-abraded (860); polished "3D square" design 34 kPa (5 psi) abrasion (870); polished purina non-abraded (880); and polished purina 34 kPa (5 psi) abrasion (890). The initial rough cut samples were 0.9 mm nominal thickness. The initial polished samples were 0.7 mm nominal thickness. The resulting rough cut samples, with and without patterning, and the resulting polished samples, with and without patterning, were ion exchanged, for example, in KNO₃ for 8 hrs at 430°C.

An alternative approach (e.g., Fig. 4B) of starting with a rough-cut surface sample (outside the scope of the claims) can eliminate process steps from the abovementioned related glossy substrate methods (e.g., Fig. 4A). For example, in the rough-cut methods, Step 2 of the glossy substrate methods can be eliminated since there is no need for roughening of the already rough rough-cut surface or matte surface. Optionally, one can eliminate Step 5 of the glossy substrate methods from the rough-cut surface sample method since there is no need for chemically polishing the surface of (471) to obtain a tri-level decoration having a matte surface finish since (471) already has tri-level decoration characteristics.

Comparable grey colors to those produced from starting with polished parts are also obtained. Patterns were applied to samples having rough-cut sample surfaces. RoR and abraded RoR data suggest that the use of a non-polished surface can provide acceptable strength values while eliminating one or more of the above method steps used to make grey scale patterns.

Figs. 7 and 8 taken together show that the thicker rough cut parts have a slightly higher load-to-failure values. The data from the rough cut parts also shows that the finished part strength does not suffer by patterning, i.e., decorating the substrate surface in accordance with the disclosed methods.

*Surface roughening and polishing.* A glossy substrate surface can be roughened in a chemical etchant containing, for example, hydrofluoric acid (HF), ammonium fluoride (NH₄F), and propylene glycol (PG). During the etching, crystals grow on the glossy substrate surface and serve as internal masks to develop a rough surface. The roughened glass surface can be chemically polished by etchant containing HF and a mineral acid (e.g., H₂SO₄, HCl, HNO₃, or like acids, and mixtures thereof). The polishing process blunts the sharp tips or protrusions on the etched substrate surface and changes the morphology of the etched substrate surface. Both the roughening and polishing steps change the surface morphology and surface roughness of the glossy substrate surface.

*Manipulating brightness and color* In embodiments, the disclosure provides a method changing the appearance (i.e., color) after the chemical treatments, such as roughening and polishing (see Fig. 1). For example, in Table 1, there are listed seven initially glossy substrate samples after having different chemical treatments. After etching, the surface roughness significantly increases to about 560 nm and small surface protrusions were formed (Fig. 2B). Further chemical polishing gradually reduces the surface roughness but increases the distances of the protrusions (or feature size in Table 1, images shown in Figs. 2C to 2F). The morphology variation directly impacts the brightness and color of the glossy substrate. Fig. 3A shows the reflectance spectra of glossy substrates before and after both chemical roughening and chemical polishing. The overall intensity of the reflectance light decreases when glass gets roughened but the reflectance light increases when the roughened glass is chemically polished. This is shown as L^{∗} in Fig. 3B as in F02 SCI L^{∗}). At the same time, the chemical roughening shifts the glossy substrate surface color from black to blue for a black glossy substrate, but chemical polishing turns the black matte substrate surface color to relatively more positive b^{∗} values (Fig. 3C). The impacts of chemically etching the glossy substrate surface are summarized in Table 2.

*Generating patterns on the glossy substrate surface* The capability of changing color, changing gloss, changing texture, and changing appearance of the glossy substrate piece enables an operator to create patterns and images on the glossy substrate surface that are not believed to be possible with other methods such as printing or painting. The glossy substrate piece with aesthetic patterns, designs, or pictures is believed to be more appealing and desirable for customers. In embodiments, the disclosure provides a method to create a pattern on the glossy substrate surface by combining etching and surface masking techniques. Fig. 4A shows a process flow diagram for creating a cubic pattern on the glossy substrate surface. The method uses six steps to achieve the design including masking, etching (roughening and polishing), and removing the mask. The inventive concept and method provides multiple levels of contrast (color and greyscale) on the same surface by selectively exposing the surface to the roughening reagent, to the polishing reagent, or both. Fig. 4B shows a process flow diagram for creating the same cubic pattern as in Fig. 4A but instead begins with a rough-cut or matte finish substrate surface.

Figs. 5A to 5D shows images of the designed patterns and corresponding finished appearance of the decorated glossy substrate piece. The two-levels of contrast can be achieved by a simple process of three steps, including masking; roughening; and removing the mask, such as the leaves and the stars shown in Figs. 5A and 5B. The three levels (tri-level) of contrast (e.g., the illustrated 3D cubic design) can be achieved by a six-step sequence including: masking; roughening; removing the mask; masking a different area; chemical polishing; and removing the mask, as shown in Figs. 5C and 5D.

An additional feature of the disclosed aesthetic glossy substrate is that of changing the contrast by viewing the piece part at a different angle. For example, Samples No. 2 and No. 6 in Table 1 were roughened for 8 min only, and roughened for 8 min and polished for 9 min, respectively. Compared to Sample No. 6, Sample No. 2 has a lower gloss value at 20°, but a higher gloss value at 60° (Gloss 60) and 85° (Gloss 85) (Table 1).

*Mechanical performance* - *ion exchange strengthening.* Glossy substrate piece parts, with and without patterning, were ion exchanged in KNO₃ (potassium nitrate) for 8 hrs at 430°C and evaluated by RoR and aRoR tests. The result indicated the relative surface strength decreased slightly with the patterns on the glossy substrate surface according to: no pattern greater than small square pattern (bi-level contrast) greater than a 3D square pattern (tri-level of contrast). The aRoR results suggest that there is no significant difference in the retained strength between the non-patterned and the patterned glossy substrate parts.

### Procedures

*Chemical Roughening.* An exemplary roughening etchant can contain, for example, a mixture of HF, NH₄F, and propylene glycol (PG). In a typical roughening process, the etchant contains, for example, 6 wt% of HF, 5 wt% of NH₄F, and 25 wt% of PG. The glossy substrate part is vertically dipped in the etchant for 8 min without mechanical agitation. The roughened part is then briefly rinsed in DI water and soaked in mineral acid (e.g., 3M HCl) for 5 min to remove the insoluble sludge. Finally, the part is rinsed in DI water.

*Chemical Polishing.* An exemplary polishing etchant composition can contain, for example, HF, and optionally in admixture with a mineral acid (e.g., H₂SO₄, HCl, HNO₃, or mixtures thereof). In a typical chemical polishing step the polishing etchant can contain, for example, 2.5 wt% of aqueous HF, and 1.5 wt% of aqueous HCl, which polishing etchant can also be presented as a mixture of 1.45 M aqueous HF and 0.6 M aqueous HCl. By soaking the roughened glossy substrate part in the polishing etchant for a different period of time (e.g., from 1 to 12 mins), the part can achieve at least one of different (i.e., differential) surface roughness, gloss value, color, reflectance, or combinations thereof. The polished part can be cleaned by, for example, rinsing in DI water.

*Printing Methods.* The mask was applied to the glossy substrate surface using a standard inkjet printing technique. Alternatively or additionally, the mask can also be applied by, for example, screen printing, photolithography, painting, sublimation, and like methods, or combinations thereof.

*Mask removal.* After chemical etching (i.e., roughening), or chemical polishing, the mask can be removed from the glossy substrate surface. In embodiments, the mask was removed by, for example, soaking the masked part in acetone for 2 min and the mask detaches from the glossy substrate surface. The solvent selected for removing the mask can depend, for example, on the material or coating selected to create the mask, such as an ink, a binder, a paint, and like materials or coatings, and the solubility of the mask in the solvent.

### EXAMPLES

The following Examples demonstrate making, use, and analysis of the disclosed decorated articles and methods of making in accordance with the above general procedures.

### Reference Example 1

**Generate bi-level contrast image: demonstration of generating leaf and star images on a glossy substrate surface.** To achieve a bi-level contrast image, a glossy substrate piece was roughened in a mixture of 6 wt% HF/5 wt% NH₄F/25 wt% propylene glycol (PG) for 8 mins. The surface was sequentially cleaned by: rinsing in DI water; soaking in 3 M aqueous HCl for 5 mins; and rinsing in DI water. The image mask of "leaves" and "stars" was printed on the roughened glossy substrate surface by inkjet printing. The masked piece was then polished in a mixture of aqueous 2.5 wt% HF and aqueous 1.5 wt% HCl for 6 mins, and rinsed in DI water. The mask was removed by soaking the piece in acetone for 2 mins. The design and achieved surface decorations are shown in Figs. 5A and 5B. The depth of chemical polishing was characterized by the interferometer (Zygo), and the removal depth was about 12 micrometers.

This example provides a methodology for a chemical strategy to manipulate color (appearance), and the surface roughness, i.e., the touch feel of the resulting decorated glass, glass-ceramic, or ceramic materials or parts.

### Example 2

**Generate tri-level contrast image: demonstration of generating 3D square (cubic) patterns on the glossy substrate surface.** The disclosed six step method illustrated in Fig. 4A was used. After masking a first square or rhombus of a prospective three square area, the glossy substrate was chemically roughened in an aqueous mixture of 6 wt% HF/5wt% NH₄F/25wt% PG for 8 mins following the procedure in Example 1. The mask was then removed by soaking the roughened piece part in acetone for 2 mins. The part was then cleaned and masked a second time on another square or rhomboidal area. The second masked or re-masked part was then chemically polished in a mixture of aqueous 2.5 wt% HF/1.5 wt% HCl for 6 min, and cleaned with DI water. The second mask was removed by immersion in acetone for 2 mins. The design and final appearance of the decorated glossy substrate piece is shown in Figs. 5C (template) and 5D (finished piece), respectively.

### Example 3

**Glass Substrate Low in Modifiers and Glossy Substrate Roughening Etchant** A glass sheet having a low percentage such as less than 5 mol% of modifiers, for example, an alkali oxide such as K₂O, Na₂O, Li₂O, and like oxides, or mixtures thereof, an alkali earth oxide, such as MgO, CaO, SrO, and like oxides, or mixtures thereof, and a black ink (see below) masked surface area was etched to a matte finish in an etchant containing an aqueous mixture of 6 wt% hydrofluoric acid and 5 wt% aqueous potassium chloride, for 8 mins to provide an etched surface in areas of the glass that were not protected by the surface mask. The surface roughness (Ra) of the glass in the etched area was measured to be about 300 nm (e.g., 267 nm). The process flow in similar to that in Fig. 4A, with the exception that the roughening agent in step (425) is replaced with the roughening agent of this example.

### Example 4

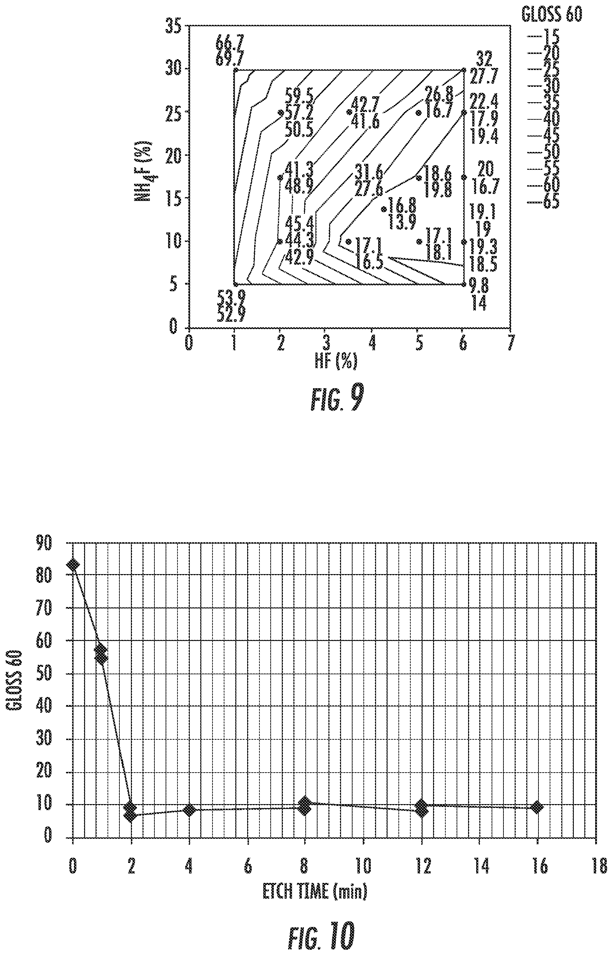

**White glass ceramic and ceramic of a majority of crystal phases** Gloss level can be controlled by changing the etchant composition. Parts were etched in a specific etchant for 8 mins to achieve a desired gloss level and surface appearance. Fig. 9 shows a gloss 60 contour plot for an aqueous etchant that contained an ammonium fluoride and hydrofluoric acid in the weight percentages specified on the axes of the graph, which compositions can determine the final gloss level after a selected etching time interval, such as about 8 mins of etching. Using the disclosed masking and differential etching method, patterned surfaces having multiple contrast levels can be achieved. The disclosed masking and differential etching method can provide patterned glass ceramic materials beginning at different greyscale levels, such as white, black, and a spectrum of intermediate grey levels.

In embodiments, the same or similar gloss values shown in Fig. 9 can be achieved by using a different etchant. Similar gloss levels can also be achieved by etching the glass ceramic material using aqueous hydrofluoric acid, for example, in from 0.1M to 3M aqueous HF (i.e., 0.17 to 5 wt% HF in water) and optionally including a mineral acid, for example, H₂SO₄, HNO₃, HCl, and like acids, or mixtures thereof in, for example, from 0.1M to 3M aqueous mineral acid. For example, using an etchant containing 1.5 M HF and 0.9 M sulfuric acid in water, different gloss level can be achieved by etching a white ceramic material for different periods of time as summarized in Table 3 and in Fig. 10.

**Table 3. Mixed 1.5 M HF and 0.9 M H₂SO₄ aqueous etchant for achieving gloss targets.**

| **Sample** | **HF (M)** | **H₂SO₄ (M)** | **Time (mins)** | **Gloss 60¹** |
|---|---|---|---|---|
| 1 | 0 | 0 | 0 | 83.4 |
| 2 | 1.5 | 0.9 | 1 | 57.4 |
| 3 | 1.5 | 0.9 | 1 | 54.9 |
| 4 | 1.5 | 0.9 | 2 | 9.1 |
| 5 | 1.5 | 0.9 | 2 | 7 |
| 6 | 1.5 | 0.9 | 4 | 8.2 |
| 7 | 1.5 | 0.9 | 4 | 8.8 |
| 8 | 1.5 | 0.9 | 8 | 9.1 |
| 9 | 1.5 | 0.9 | 8 | 10.9 |
| 10 | 1.5 | 0.9 | 12 | 8.1 |
| 11 | 1.5 | 0.9 | 12 | 9.6 |
| 12 | 1.5 | 0.9 | 16 | 9.1 |

| | | | | |
|---|---|---|---|---|
| 1. As measured by a Gloss meter. | | | | |

The black ink, known commercially as SQS Black from Sun Chemicals and used for making the black mask, is believed to include a multifunctional acrylate 40 to 70 wt%, n-vinylcaprolactam 25 to 40 wt%, trimethylbenzoyldiphenylphosphine oxide 2.5 to 5 wt%, and tridecyl acrylate 1 to 2.5 wt%.

The black ink mask was deposited by, for example, ink jetting and curing, and the deposited and cured black ink mask was removed by, for example, dissolving the mask in a suitable solvent. The masked and etched sample was submerged in acetone for 1 to 3 mins. Other solvents can be used to remove the black ink from the substrate surface but may require longer soak times.

In embodiments, the solvent treated substrate can be further heat treated to burn out residual surface contaminants. In embodiments, the burn out method for white glass ceramic calls for heating for at least one hour at 600 °C in air. The burn out temperature is selected to be sufficiently high to burn out residual organics but not so high as to warp or distort the glass ceramic or the formed images, or make the crystalline phase grow in size or otherwise change morphology.

In embodiments, the ink, an etch resist material known commercially as MacDermid CircuitJet 200 UV InkJet Etch Resist from MacDermid Electronics Solutions.

In embodiments, the masking, chemical roughening, mask removal, and substrate cleaning, can include, for example: Applying an Etch Resist, such as the MacDermid CircuitJet 200, for example, 25 sec/part; Acid Etch, for example, 10 min / batch; Strip Etch Resist using, for example, MacDermid CircuitJet Stripper NP (N-methylpyrrolidone) or other suitable organic solvent or mixture of suitable organic solvents, for example, 5 min / batch; and cleaning, for example with a Semi-clean formulation, having about 3 wt% aqueous KOH.

In embodiments, the following remarks regarding the disclosed substrate decoration methods that used the MacDermid Circuitjet mask materials and etch procedure are noteworthy.

**The Print and Cure Etch Resist:** The print quality appeared to be excellent. There was no evidence of satellite ink drops or broken lines.

**The Etch:** One or two sample sets of the CircuitJet masked substrate lifted off prematurely in the etch bath, starting at 5 mins into the 10 mins time interval, this set had a higher line weight. A second set of CircuitJet masked samples survived the entire 10 mins in the etch bath and these samples had a higher line weight.

**The Strip:** The etch resist (ER) can be stripped or removed with MacDermid Circuit Stripper NP or an organic solvent such as N-methylpyrrolidone (NMP).

**The Cleaning:** Semi-clean cleaning solution (about 3 wt% aqueous KOH) was used to remove the mask.

Accordingly, the MacDermid Circuitjet mask material and method is operational as an alternative in the disclosed methods. However, masks having a thickness which is too thin may fall off the substrate prematurely in the etch bath.

## Claims

1. A decorated glass-ceramic article, comprising:
at least three different gloss contrast regions having at least three gloss levels having a relative gloss difference of at least 20 units when measured at from at least one incidence angle of: 20 degrees, 60 degrees, or 85 degrees.

2. A decorated matte article, comprising:
a substrate having a first matte appearance and a first rough surface texture having a first roughness; and
a plurality of contrast regions on the surface of the substrate comprising:
a second matte contrast region and a second rough texture having a second roughness, and
a third matte contrast region and a third rough texture having a third roughness, wherein the first roughness is less rough than the second roughness, and the second roughness is different from the first and the third roughness.

3. A method of making an article having aesthetic surface features having two or more contrast levels on at least a portion of the surface of a chemically etchable original substrate, comprising :
a first masking on at least a portion of the original surface area of the substrate to form a partially masked substrate;
a first chemical roughening on at least a portion of the unmasked surface area portion of the masked substrate to produce a matte-finished area on the masked substrate;
removing the first mask to produce a first area of contrast with respect to the original surface area and the matte-finished area;
a second masking on at least a portion of the matte-finished surface area to form a masked matte-finished area;
a first chemical polishing on at least a portion of the unmasked matte-finished area to produce a first polished matte-finished area; and
removing the second mask to produce a second area of contrast with respect to the unmasked original surface area, the matte-finished surface area, and the polished matte-finished area.

4. The method of claim 3 wherein the first masking applies an etch-resistant material selected from at least one of: a wax, a polymer, a water insoluble film or coat, a UV curable film or coat, an adhesive, a lamination layer, or a combination thereof, and the first masking applies the mask to the surface by inkjet printing, screen printing, lamination, or combinations thereof.

5. The method of claim 3 wherein the first chemical roughening produces a roughened surface having a matte-finished appearance and the original surface is a substrate selected from at least one of: a glossy glass, a glossy glass-ceramic, a glossy ceramic, or a combination thereof.

6. The method of claim 3 wherein the first chemical roughening includes etching the original surface substrate with an etchant containing hydrofluoric acid (HF) and produces a roughened surface having a surface roughness of from 200 to 1,000 nm RMS, and the first chemical polishing accomplishes at least one of:
polishing the matte-finished surface;
reducing the surface roughness;
changing the color of the original surface;
or a combination thereof.

7. The method of claim 3 wherein the first chemical polishing changes only the visual appearance of the matte-finished surface and not the visual appearance of the original surface.

8. The method of claim 3 wherein removing the first mask is accomplished by contacting the mask of the masked original surface area in a suitable organic solvent.

9. The method of claim 3 wherein the original substrate has a thickness of from 50 microns to 100 millimeters, the original substrate has a geometry selected from flat, curved, or a combination thereof, and the strength of the produced article is unchanged or is reduced by from 0.1 to 20 percent compared to the strength of the original substrate.

10. The method of claim 3 wherein the first area of contrast with respect to the original surface area, the second area of contrast with respect to the original surface area, and the matte-finished area, each have a relative reflectance difference of from 5 to 25%.

11. The method of claim 3 wherein:
if the original substrate is a black opaque glossy ceramic substrate, then it has a total reflectance of 90 to 99% including the specular component of from 0.001 to 20%, and has a total transmittance of from 0.001 to 20%;
if the original substrate is a white opaque glossy ceramic substrate, then it has a total reflectance of 75 to 99% including the specular component of from 0.001 to 20%, and has a total transmittance of from 0.001 to 20%; and
if the original substrate is a grey opaque glossy ceramic substrate, then the substrate has a total reflectance of 40 to 75% and has a total transmittance of from 0.001 to 20%.

12. The method of claim 3 wherein removing the second mask produces the second area of contrast with respect to the original surface area and the matte-finished area and the resulting substrate has two or more surface textures, the two or more surface textures each having a gloss difference with respect to the other surface textures of from 5 to 20%.

13. The method of claim 3 wherein the first etching is accomplished in a solution comprising a fluorinated acid selected from HF, NH₄F, NH₅F₂, KF, NaF, KHF₂, NaHF₂, or a combination thereof, and the first chemical polishing is accomplished in a solution containing HF, a mineral acid, an organic acid, or a combination thereof.

14. The method of claim 3 wherein:
the original substrate is a glossy substrate having a gloss value (gloss 85) from 80 to 100 and a surface roughness from 0.2 nm RMS to 10 nm RMS;
the matte-finished area has a gloss value (gloss 85) of from 40 to 60 and a surface roughness from 10 nm RMS to 1,000 nm RMS;
the first area of contrast has a gloss value (gloss 85) of from 80 to 100 and a surface roughness from 0.2 nm RMS to 100 nm RMS;
the first chemically polished matte-finished area has a gloss value (gloss 85) of from 40 to 60 and a surface roughness from 200 nm RMS to 1,000 nm RMS; and
the second area of contrast has a gloss value (gloss 85) of from 10 to 30 and a surface roughness from 200 nm RMS to an RMS less than the RMS of the first chemically polished matte finished area of from 200 nm RMS to 1,000 nm RMS.

## Patentansprüche

1. Dekorierter Glaskeramikartikel, umfassend:
zumindest drei unterschiedliche Glanzkontrastregionen mit zumindest drei Glanzstufen mit einem relativen Glanzunterschied von zumindest 20 Einheiten, wenn aus zumindest einem Einfallswinkel von Folgendem gemessen: 20 Grad, 60 Grad oder 85 Grad.

2. Dekorierter matter Artikel, umfassend:
ein Substrat mit einem ersten matten Erscheinungsbild und einer ersten rauen Oberflächentextur mit einer ersten Rauheit; und
eine Vielzahl von Kontrastregionen auf der Oberfläche des Substrats, umfassend:
eine zweite matte Kontrastregion und eine zweite raue Textur mit einer zweiten Rauheit, und
eine dritte matte Kontrastregion und eine dritte raue Textur mit einer dritten Rauheit, wobei die erste Rauheit weniger rau als die zweite Rauheit ist und sich die zweite Rauheit von der ersten und der dritten Rauheit unterscheidet.

3. Verfahren zum Herstellen eines Artikels mit ästhetischen Oberflächenmerkmalen mit zwei oder mehr Kontraststufen auf zumindest einem Abschnitt der Oberfläche eines chemisch ätzbaren ursprünglichen Substrats, umfassend:
ein erstes Maskieren auf zumindest einem Abschnitt des ursprünglichen Oberflächenbereichs des Substrats, um ein teilweise maskiertes Substrat zu bilden;
ein erstes chemisches Aufrauen auf zumindest einem Abschnitt des unmaskierten Oberflächenbereichsabschnittes des maskierten Substrats, um einen mattierten Bereich auf dem maskierten Substrat zu erzeugen;
Entfernen der ersten Maske, um einen ersten Kontrastbereich in Bezug auf den ursprünglichen Oberflächenbereich und den mattierten Bereich zu erzeugen;
ein zweites Maskieren auf zumindest einem Abschnitt des mattierten Oberflächenbereichs, um einen maskierten mattierten Bereich zu bilden;
ein erstes chemisches Polieren auf zumindest einem Abschnitt des unmaskierten mattierten Bereichs, um einen ersten polierten mattierten Bereich zu erzeugen; und
Entfernen der zweiten Maske, um einen zweiten Kontrastbereich in Bezug auf den unmaskierten ursprünglichen Oberflächenbereich, den mattierten Oberflächenbereich und den polierten mattierten Bereich zu erzeugen.

4. Verfahren nach Anspruch 3, wobei das erste Maskieren ein ätzbeständiges Material aufbringt, ausgewählt aus zumindest einem von: einem Wachs, einem Polymer, einem wasserunlöslichen Film oder einer wasserunlöslichen Beschichtung, einem UV-härtbaren Film oder einer UV-härtbaren Beschichtung, einem Klebstoff, einer Laminierungsschicht oder einer Kombination davon, und das erste Maskieren die Maske durch Tintenstrahldrucken, Siebdrucken, Laminierung oder Kombinationen davon auf die Oberfläche aufbringt.

5. Verfahren nach Anspruch 3, wobei das erste chemische Aufrauen eine aufgeraute Oberfläche mit einem mattierten Erscheinungsbild erzeugt und die ursprüngliche Oberfläche ein Substrat ist, ausgewählt aus zumindest einem von: einem glänzenden Glas, einer glänzenden Glaskeramik, einer glänzenden Keramik oder einer Kombination davon.

6. Verfahren nach Anspruch 3, wobei das erste chemische Aufrauen das Ätzen des ursprünglichen Oberflächensubstrats mit einem Ätzmittel beinhaltet, das Fluorwasserstoffsäure (HF) enthält, und eine aufgeraute Oberfläche mit einer Oberflächenrauheit von 200 bis 1.000 nm RMS erzeugt, und das erste chemische Polieren zumindest eines von Folgendem erreicht:
Polieren der mattierten Oberfläche;
Reduzieren der Oberflächenrauheit;
Ändern der Farbe der ursprünglichen Oberfläche;
oder eine Kombination davon.

7. Verfahren nach Anspruch 3, wobei das erste chemische Polieren nur das visuelle Erscheinungsbild der mattierten Oberfläche und nicht das visuelle Erscheinungsbild der ursprünglichen Oberfläche verändert.

8. Verfahren nach Anspruch 3, wobei das Entfernen der ersten Maske durch Kontaktieren der Maske des maskierten ursprünglichen Oberflächenbereichs in einem geeigneten organischen Lösungsmittel erreicht wird.

9. Verfahren nach Anspruch 3, wobei das ursprüngliche Substrat eine Dicke von 50 Mikrometern bis 100 Millimetern aufweist, das ursprüngliche Substrat eine Geometrie aufweist, die aus flach, gekrümmt oder einer Kombination davon ausgewählt ist, und die Festigkeit des erzeugten Artikels unverändert ist oder um 0,1 bis 20 Prozent verglichen mit der Festigkeit des ursprünglichen Substrats reduziert ist.

10. Verfahren nach Anspruch 3, wobei der erste Kontrastbereich in Bezug auf den ursprünglichen Oberflächenbereich, der zweite Kontrastbereich in Bezug auf den ursprünglichen Oberflächenbereich und der mattierte Bereich jeweils einen relativen Reflexionsunterschied von 5 bis 25 % aufweisen.

11. Verfahren nach Anspruch 3, wobei:
wenn das ursprüngliche Substrat ein schwarzes undurchsichtiges glänzendes Keramiksubstrat ist, es dann eine Gesamtreflexion von 90 bis 99 % aufweist, beinhaltend die Spiegelkomponente von 0,001 bis 20 %, und eine Gesamtdurchlässigkeit von 0,001 bis 20 % aufweist;
wenn das ursprüngliche Substrat ein weißes undurchsichtiges glänzendes Keramiksubstrat ist, es dann eine Gesamtreflexion von 75 bis 99 % aufweist, beinhaltend die Spiegelkomponente von 0,001 bis 20 %, und eine Gesamtdurchlässigkeit von 0,001 bis 20 % aufweist; und
wenn das ursprüngliche Substrat ein graues undurchsichtiges glänzendes Keramiksubstrat ist, das Substrat dann eine Gesamtreflexion von 40 bis 75 % aufweist und eine Gesamtdurchlässigkeit von 0,001 bis 20 % aufweist.

12. Verfahren nach Anspruch 3, wobei das Entfernen der zweiten Maske den zweiten Kontrastbereich in Bezug auf den ursprünglichen Oberflächenbereich und den mattierten Bereich erzeugt und das resultierende Substrat zwei oder mehr Oberflächentexturen aufweist, wobei die zwei oder mehr Oberflächentexturen jeweils einen Glanzunterschied in Bezug auf die anderen Oberflächentexturen von 5 bis 20 % aufweisen.

13. Verfahren nach Anspruch 3, wobei das erste Ätzen in einer Lösung erreicht wird, die eine fluorierte Säure umfasst, ausgewählt aus HF, NH₄F, NH₅F₂, KF, NaF, KHF₂, NaHF₂ oder einer Kombination davon, und das erste chemische Polieren in einer Lösung erreicht wird, die HF, eine Mineralsäure, eine organische Säure oder eine Kombination davon enthält.

14. Verfahren nach Anspruch 3, wobei:
das ursprüngliche Substrat ein glänzendes Substrat mit einem Glanzwert (Glanz 85) von 80 bis 100 und einer Oberflächenrauheit von 0,2 nm RMS bis 10 nm RMS ist;
der mattierte Bereich einen Glanzwert (Glanz 85) von 40 bis 60 und eine Oberflächenrauheit von 10 nm RMS bis 1.000 nm RMS aufweist;
der erste Kontrastbereich einen Glanzwert (Glanz 85) von 80 bis 100 und eine Oberflächenrauheit von 0,2 nm RMS bis 100 nm RMS aufweist;
der erste chemisch polierte mattierte Bereich einen Glanzwert (Glanz 85) von 40 bis 60 und eine Oberflächenrauheit von 200 nm RMS bis 1.000 nm RMS aufweist; und
der zweite Kontrastbereich einen Glanzwert (Glanz 85) von 10 bis 30 und eine Oberflächenrauheit von 200 nm RMS bis zu einem RMS von weniger als dem RMS des ersten chemisch polierten mattierten Bereichs von 200 nm RMS bis 1.000 nm RMS aufweist.

## Revendications

1. Article en vitrocéramique décoré, comprenant :
au moins trois régions de contraste de brillance différentes ayant au moins trois niveaux de brillance ayant une différence de brillance relative d'au moins 20 unités lorsqu'elle est mesurée selon au moins un angle d'incidence de : 20 degrés, 60 degrés ou 85 degrés.

2. Article mat décoré, comprenant :
un substrat ayant un premier aspect mat et une première texture de surface rugueuse ayant une première rugosité ; et
une pluralité de régions de contraste sur la surface du substrat comprenant :
une deuxième région de contraste mate et une deuxième texture rugueuse ayant une deuxième rugosité, et
une troisième région de contraste mate et une troisième texture rugueuse ayant une troisième rugosité, dans lequel la première rugosité est moins rugueuse que la deuxième rugosité, et la deuxième rugosité est différente de la première et de la troisième rugosités.

3. Procédé de fabrication d'un article ayant des caractéristiques de surface esthétiques ayant deux niveaux de contraste ou plus sur au moins une partie de la surface d'un substrat d'origine attaquable chimiquement, comprenant :
un premier masquage sur au moins une partie de la zone de surface d'origine du substrat pour former un substrat partiellement masqué ;
un premier rendu rugueux chimique sur au moins une partie de la partie de la zone de surface non masquée du substrat masqué pour produire une zone à finition mate sur le substrat masqué ;
le retrait du premier masque pour produire une première zone de contraste par rapport à la surface d'origine et à la zone à finition mate ;
un deuxième masquage sur au moins une partie de la zone de surface à finition mate pour former une zone à finition mate masquée ;
un premier polissage chimique sur au moins une partie de la zone à finition mate non masquée pour produire une première zone à finition mate polie ; et
le retrait du deuxième masque pour produire une deuxième zone de contraste par rapport à la zone de surface d'origine non masquée, la zone de surface à finition mate et la zone à finition mate polie.

4. Procédé selon la revendication 3, dans lequel le premier masquage applique un matériau résistant à la gravure choisi parmi au moins l'un parmi : une cire, un polymère, un film ou un revêtement insoluble dans l'eau, un film ou un revêtement durcissable aux UV, un adhésif, une couche de lamination, ou une combinaison de ceux-ci, et le premier masquage applique le masque sur la surface par impression à jet d'encre, sérigraphie, lamination ou des combinaisons de ceux-ci.

5. Procédé selon la revendication 3, dans lequel le premier rendu rugueux chimique produit une surface rugosifiée ayant un aspect à finition mate et la surface d'origine est un substrat choisi parmi au moins l'un parmi : un verre brillant, une vitrocéramique brillante, une céramique brillante ou une combinaison de ceux-ci.

6. Procédé selon la revendication 3, dans lequel le premier rendu rugueux chimique comprend la gravure du substrat de surface d'origine avec un agent de gravure contenant de l'acide fluorhydrique (HF) et produit une surface rugosifiée ayant une rugosité de surface de 200 à 1 000 nm RMS, et le premier polissage chimique accomplit au moins l'une des actions suivantes :
polissage de la surface à finition mate ;
réduction de la rugosité de surface ;
changement de la couleur de la surface d'origine ;
ou une combinaison de celles-ci.

7. Procédé selon la revendication 3, dans lequel le premier polissage chimique change uniquement l'aspect visuel de la surface à finition mate et non l'aspect visuel de la surface d'origine.

8. Procédé selon la revendication 3, dans lequel le retrait du premier masque est accompli en mettant en contact le masque de la zone de surface d'origine masquée dans un solvant organique approprié.

9. Procédé selon la revendication 3, dans lequel le substrat d'origine a une épaisseur de 50 microns à 100 millimètres, le substrat d'origine a une géométrie choisie parmi plate, incurvée ou une combinaison de celles-ci, et la résistance de l'article produit est inchangée ou est réduite de 0,1 à 20 % par rapport à la résistance du substrat d'origine.

10. Procédé selon la revendication 3, dans lequel la première zone de contraste par rapport à la zone de surface d'origine, la deuxième zone de contraste par rapport à la zone de surface d'origine et la zone à finition mate ont chacune une différence de réflectance relative de 5 à 25 %.

11. Procédé selon la revendication 3, dans lequel :
si le substrat d'origine est un substrat céramique brillant opaque noir, alors il a une réflectance totale de 90 à 99 % incluant la composante spéculaire de 0,001 à 20 %, et a une transmittance totale de 0,001 à 20 % ;
si le substrat d'origine est un substrat céramique brillant opaque blanc, alors il a une réflectance totale de 75 à 99 % incluant la composante spéculaire de 0,001 à 20 %, et a une transmittance totale de 0,001 à 20 % ; et
si le substrat d'origine est un substrat céramique gris opaque brillant, alors le substrat a une réflectance totale de 40 à 75 % et a une transmittance totale de 0,001 à 20 %.

12. Procédé selon la revendication 3, dans lequel le retrait du deuxième masque produit la deuxième zone de contraste par rapport à la zone de surface d'origine et la zone à finition mate et le substrat résultant a deux textures de surface ou plus, les deux textures de surface ou plus ayant chacune une différence de brillance par rapport aux autres textures de surface de 5 à 20 %.

13. Procédé selon la revendication 3, dans lequel la première attaque est accomplie dans une solution comprenant un acide fluoré choisi parmi HF, NH₄F, NH₅F₂, KF, NaF, KHF₂, NaHF₂, ou une combinaison de ceux-ci, et le premier polissage chimique est accompli dans une solution contenant HF, un acide minéral, un acide organique ou une combinaison de ceux-ci.

14. Procédé selon la revendication 3, dans lequel :
le substrat d'origine est un substrat brillant ayant une valeur de brillance (brillant 85) de 80 à 100 et une rugosité de surface de 0,2 nm RMS à 10 nm RMS ;
la zone à finition mate a une valeur de brillance (brillant 85) de 40 à 60 et une rugosité de surface de 10 nm RMS à 1 000 nm RMS ;
la première zone de contraste a une valeur de brillance (brillant 85) de 80 à 100 et une rugosité de surface de 0,2 nm RMS à 100 nm RMS ;
la première zone à finition mate polie chimiquement a une valeur de brillance (brillant 85) de 40 à 60 et une rugosité de surface de 200 nm RMS à 1 000 nm RMS ; et
la deuxième zone de contraste a une valeur de brillance (brillant 85) de 10 à 30 et une rugosité de surface de 200 nm RMS à une RMS inférieure à la RMS de la première zone à finition mate polie chimiquement de 200 nm RMS à 1 000 nm RMS.
